# EUROPEAN PATENT APPLICATION

(11) **EP 2 387 022 A1**
(43) Date of publication of application: **16.11.2011**
(21) Application number: 10738300.2
(22) Date of filing: 19.01.2010
(51) Int. Cl.: G09G 3/28, G09G 3/20

(54) **IMAGE PROCESSING APPARATUS AND IMAGE DISPLAY APPARATUS**

(30) Priority: 04.02.2009 JP 2009023829
(71) Applicant: Panasonic Corporation, Kadoma-shi Osaka 571-8501 (JP)
(72) Inventor: KIUCHI, Shinya, Chuo-ku, Osaka-shi Osaka 540-6207 (JP); MORI, Mitsuhiro, Chuo-ku, Osaka-shi Osaka 540-6207 (JP)
(74) Representative: Schwabe - Sandmair - Marx
(86) International application number: PCT/JP2010/000259
(87) International publication number: WO 2010/089956

(57) **Abstract**

Provided are an image processing apparatus and an image display apparatus, in which the occurrence of motion blur and dynamic false contour can be more reliably prevented. The image processing apparatus has: a sub-field conversion unit (2) that converts an input image into light emission data of each sub-field; a motion vector detection unit (3) that detects a motion vector using at least two input images which have time lag therebetween; and a sub-field regeneration unit (6) that changes the light emission data of a sub-field corresponding to a pixel which is located at a position that is moved spatially backward by the number of pixels corresponding to the motion vector into the light emission data of the sub-field of the pixel before moving, whereby the light emission data of each sub-field is spatially rearranged, and the rearranged light emission data of each sub-field of a current frame is generated using the sub-fields of at least two frames.

## Description

### Technical Field

The present invention relates to an image processing apparatus which divides one field or one frame into a plurality of sub-fields, and processes an input image to display gradation by combining a light emission sub-field which emits light and a non-light emission sub-field which does not emit light, and an image display apparatus using this image processing apparatus.

### Background Art

A plasma display apparatus has an advantage in that slimmer construction and a larger screen can be implemented, and in an AC type plasma display panel used for this plasma display apparatus, a front panel that is a glass substrate on which a plurality of scan electrodes and sustaining electrodes are arrayed, and a back panel on which a plurality of data electrodes are arrayed, are combined so that the scan electrodes and sustaining electrodes are orthogonal to the data electrodes, in order to form discharge cells in a matrix, and images are displayed by selecting arbitrary discharge cells and allowing plasma to emit.

As mentioned above, when an image is displayed, one field is divided into a plurality of screens of which the weights of brightness are different (hereafter called "sub-fields" (SFs)) in a time direction, and one field of an image, that is one frame image, is displayed by controlling the emission and non-emission of light from the discharge cells in each sub-field.

In the case of an image display apparatus using the above mentioned sub-field division, the disturbance of gradation, called a "dynamic false contour" and motion blur are generated, and display quality is diminished when moving images are displayed. In order to decrease the generation of the dynamic false contour, Patent Document 1, for example, discloses an image display apparatus which detects a motion vector of which start point is a pixel of one field of a plurality of fields included in the moving image, and end point is a pixel of another field thereof, converts the moving image into light emission data of sub-fields, and reconstructs the light emission data of the sub-fields by processing using the motion vector.

In the case of this conventional image display apparatus, a motion vector of which end point is a reconstruction target pixel of another one field, out of the motion vectors, is selected, and is multiplexed by a predetermined function to calculate a position vector, and light emission data of one sub-field of the reconstruction target pixel is reconstructed using the light emission data of the sub-field of the pixel indicated by the position vector, whereby the generation of motion blur and dynamic false contour is prevented.

As mentioned above, according to the conventional image display apparatus, a moving image is converted into the light emission data of each sub-field, and the light emission data of each sub-field is rearranged according to the motion vector, and this method for rearranging the light emission data of each sub-field will be described in concrete terms.

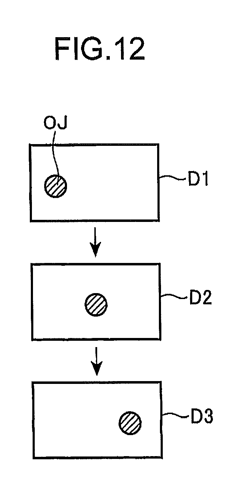

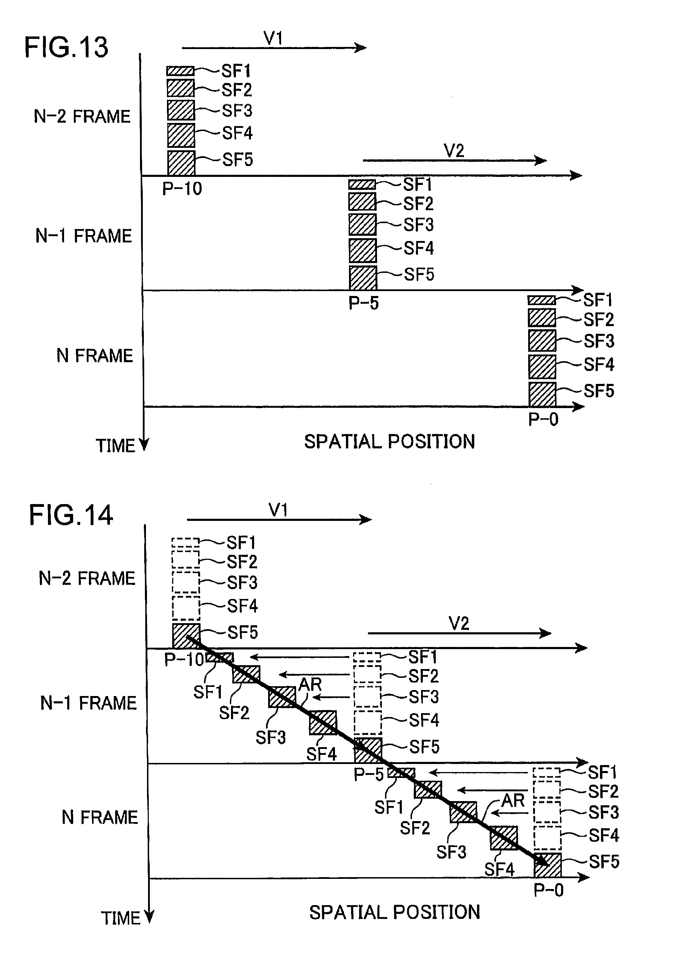

Fig. 12 is a schematic diagram depicting an example of the transition state of a display screen, Fig. 13 is a schematic diagram depicting the light emission data of each sub-field before rearranging the light emission data of each sub-field when the display screen in Fig. 12 is displayed, and Fig. 14 is a schematic diagram depicting the light emission data of each sub-field after rearranging the light emission data of each sub-field when the display screen in Fig. 12 is displayed.

As Fig. 12 shows, a case considered here is that of an N-2 frame image D-1 N-1 frame image D2 and an N frame image D3 are sequentially displayed as continuous frame images, a full screen black (e.g. brightness level 0) state is displayed as a background, and a white dot (e.g. brightness level 255), that is a mobile object OJ, moves from the left to right on the display screen as a foreground.

First the above mentioned conventional image display apparatus converts the moving image into a light emission data of each sub-field, and as Fig. 13 shows, the light emission data of each sub-field of each pixel is created for each frame as follows.

In the case of displaying the N-2 frame image D1, where one field is constituted by five sub-fields SF1 to SF5, the light emission data of all the sub-fields SF1 to SF5 of the pixel P-10 corresponding to the mobile object OJ becomes a light emission state (hatched sub-fields in Fig. 13) in the N-2 frame, and the light emission data of the sub-fields SF1 to SF5 of the other pixels become a non-light emission state (omitted in Fig. 13). Then if the mobile object OJ moves horizontally by five pixels in the N-1 frame, the light emission data of all the sub-fields SF1 to SF5 of the pixel P-5 which corresponds to the mobile object OJ becomes the light emission state, and the light emission data of the sub-fields SF1 to SF5 of the other pixels becomes a non-light emission state. Then if the mobile object OJ moves horizontally by five pixels in the N frame, the light emission data of all the sub-fields SF1 to SF5 of the pixel P-0 which corresponds to the mobile object OJ becomes a light emission state, and the light emission data of the sub-fields SF 1 to SF5 of the other pixels becomes a non-light emission state.

Then the above mentioned conventional image display apparatus rearranges the light emission data of each sub-field according to the moving vector, and as Fig. 14 shows, the light emission data after rearranging each sub-field of each pixel is created as follows for each frame.

If a moving distance of five pixels in the horizontal direction is detected as a motion vector V1 from the N-2 frame and the N-1 frame, the light emission data (light emission state) of the first sub-field SF1 of the pixel P-5 in the N-1 frame is moved to the left by four pixels, and the light emission data of the first sub-field SF1 of the pixel P-9 is changed from the non-light emission state to the light emission state (hatched sub-fields in Fig. 14), and the light emission data of the first sub-field SF1 of the pixel P-5 is changed from the light emission state to the non-light emission state (sub-fields indicated by the broken lines in Fig. 14).

The light emission data (light emission state) of the second sub-field SF2 of the pixel P-5 is moved to the left by three pixels, the light emission data of the second sub-field SF2 of the pixel P-8 is changed from the non-light emission state to the light emission state, and the light emission data of the second sub-field SF2 of the pixel P-5 is changed from the light emission state to the non-light emission state.

The light emission data (light emission state) of the third sub-field SF3 of the pixel P-5 is moved to the left by two pixels, the light emission data of the third sub-field SF3 of the pixel P-7 is changed from the non-light emission state to the light emission state, and the light emission data of the third sub-field SF3 of the pixel P-5 is changed from the light emission state to the non-light emission state.

The light emission data (light emission state) of the fourth sub-field SF4 of the pixel P-5 is moved to the left by only one pixel, the light emission data of the fourth sub-field SF4 of the pixel P-6 is changed from the non-light emission state to the light emission state, and the light emission data of the fourth sub-field SF4 of the pixel P-5 is changed from the light emission state to the non-light emission state. The light emission data of the fifth sub-field SF5 of the pixel P-5 is not changed.

In the same manner, if a moving distance of five pixels in the horizontal direction is detected as a motion vector V2 from the N-1 frame and the N frame, the light emission data (light emission state) of the first to the fourth sub-fields SF1 to SF4 of the pixels P-0 is moved to the left by four to one pixel(s), the light emission data of the first sub-field SF1 of the pixel P-4 is changed from the non-light emission state to the light emission state, the light emission data of the second sub-field SF2 of the pixel P-3 is changed from the non-light emission state to the light emission state, the light emission data of the third sub-field SF3 of the pixel P-2 is changed from the non-light emission state to the light emission state, the light emission data of the fourth sub-field SF4 of the pixel P-1 is changed from the non-light emission state to the light emission state, the light emission data of the first to the fourth sub-fields SF1 to SF4 of the pixel P-0 is changed from the light emission state to the non-light emission state, and the light emission data of the fifth sub-field SF5 is not changed.

As a result of the above mentioned sub-field rearrangement processing, to a viewer viewing the display image transiting from the N-2 frame to the N frame, the line of sight direction moves smoothly to the arrow AR direction, and the generation of motion blur and dynamic false contour can be prevented.

However if the light emission position of a sub-field is corrected by the conventional sub-field rearrangement processing, sub-fields of a pixel located at a spatially forward position are distributed to a pixel behind this pixel based on the motion vector, therefore in some cases, sub-fields are distributed from a pixel of which sub-fields should not be distributed. This problem of conventional sub-field rearrangement processing will be described in concrete terms.

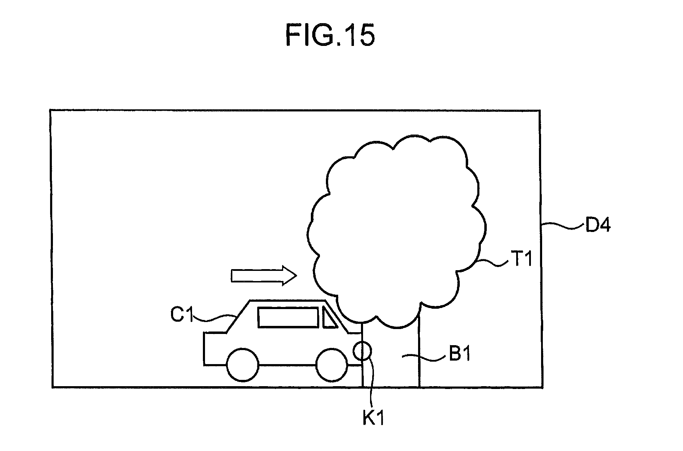

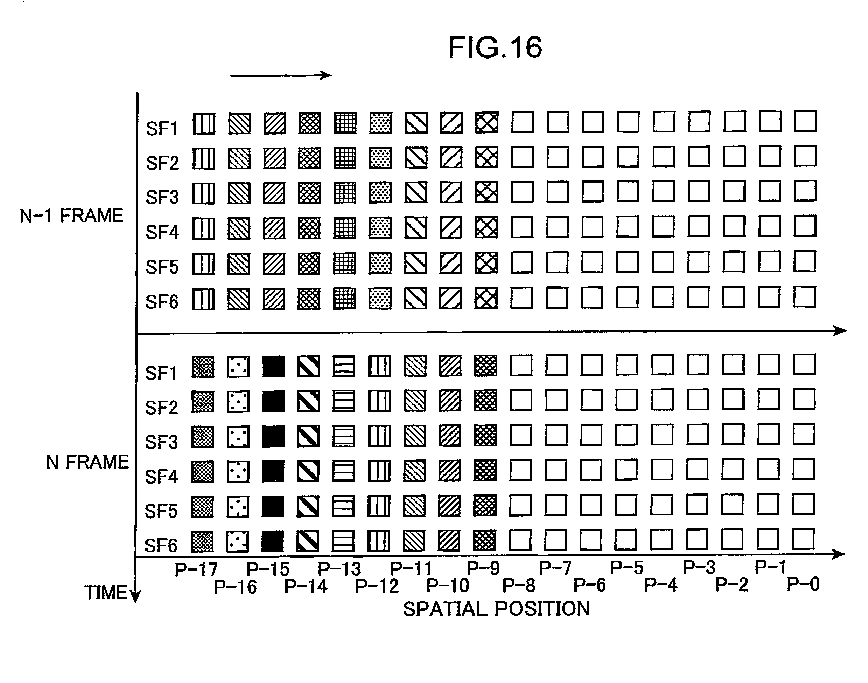

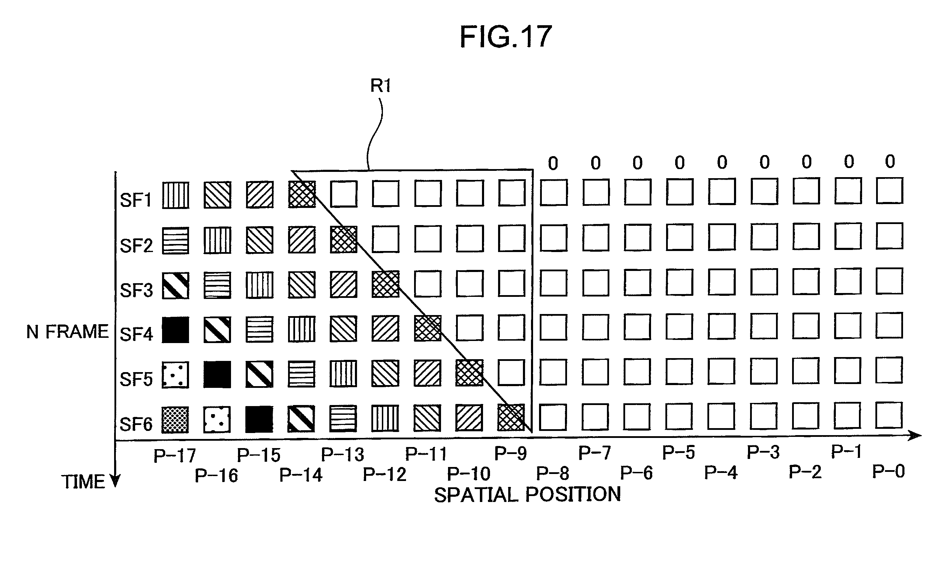

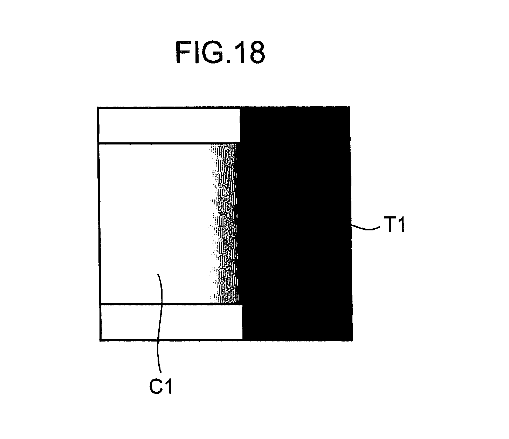

Fig. 15 illustrates an example of a display screen showing a state of a background image passing behind a foreground image, Fig. 16 is a schematic diagram depicting an example of light emission data of each sub-field before rearranging the light emission data of each sub-field in a boundary portion between the foreground image and the background image shown in Fig. 15, Fig. 17 is a schematic diagram depicting an example of light emission data of each sub-field after rearranging the light emission data of each sub-field, and Fig. 18 is a diagram depicting the boundary portion between the foreground image and the background image on the display screen in Fig. 15 after rearranging the light emission data of each sub-field.

On the display screen D4 shown in Fig. 15, a car C1 which is a background image is passing behind a tree T1 which is a foreground image. The tree T1 is stationary, and the car C1 is moving to the right. A boundary portion K1 between the foreground image and the background image is shown in Fig. 16. In Fig. 16, the pixels P-0 to P-8 are pixels constituting the tree T1, and the pixels P-9 to P-17 are pixels constituting the car C1. In Fig. 16, sub-fields belonging to a same pixel are indicated by a same hatching. The car C1 in the N frame moved from the N-1 frame by five pixels. Therefore the light emission data of the pixel P-14 in the N-1 frame is moved to the pixel P-9 in the N frame.

Here according to the conventional image display apparatus, the light emission data of each sub-field is rearranged according to the moving vector, and as Fig. 17 shows, the rearranged light emission data of each sub-field of each pixel in the N-frame is created as follows.

Since the motion vector of the pixels P-8 to P-4 is 0, the light emission data of the first to fifth sub-fields SF1 to SF5 of the pixels P-8 to P-4 does not move to the left. Therefore the light emission data of the first to fifth sub-fields SF1 to SF5 of the pixel P-9, the light emission data of the first to fourth sub-fields SF1 to SF4 of the pixel P-10, the right emission data of the first to third sub-fields SF1 to SF3 of the pixel P-11, the light emission data of the first to second sub-fields SF1 to SF2 of the pixel P-12, and the light emission data of the first sub-field SF1 of the pixel P-13 are not rearranged.

If the light emission data of the first to fifth sub-fields SF1 to SF5 of the pixels P-8 to P-4 is shifted to the left by five to one pixel(s), the sub-field in an area R1 indicated by a triangle in Fig. 17 becomes the light emission data of a sub-field corresponding to the pixels constituting the tree T1.

In other words, in the sib-fields in the area R1, the light emission data of the sub-fields of the tree T1 is rearranged. Originally the pixels P-9 to P-13 belong to the car C1, so if the light emission data of the first to fifth sub-fields SF1 to SF5 of the pixels P-8 to P-4 belonging to the tree T1 is rearranged, the motion blur and dynamic false contour are generated in the boundary portion between the car C1 and the tree T1, as shown in Fig. 18, and image quality drops.

If the light emission positions of the sub-fields are corrected in an area where the foreground image and the background image overlap, using a conventional sub-field rearrangement processing, it becomes unknown which of the light emission data of the sub-fields constituting the foreground image and the light emission data of the sub-fields constituting the background image should be arranged. This problem of conventional sub-field rearrangement processing will be described in concrete terms.

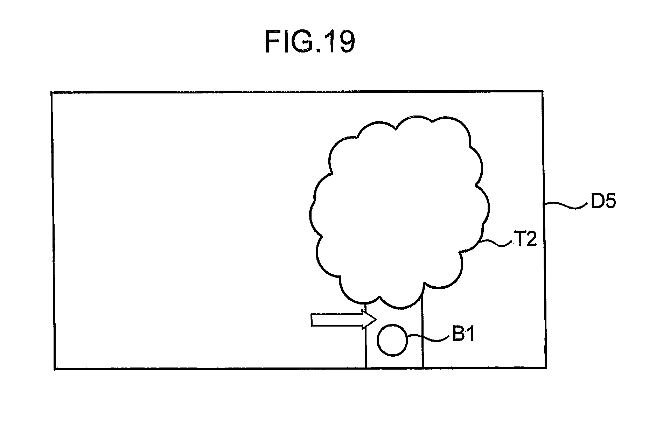

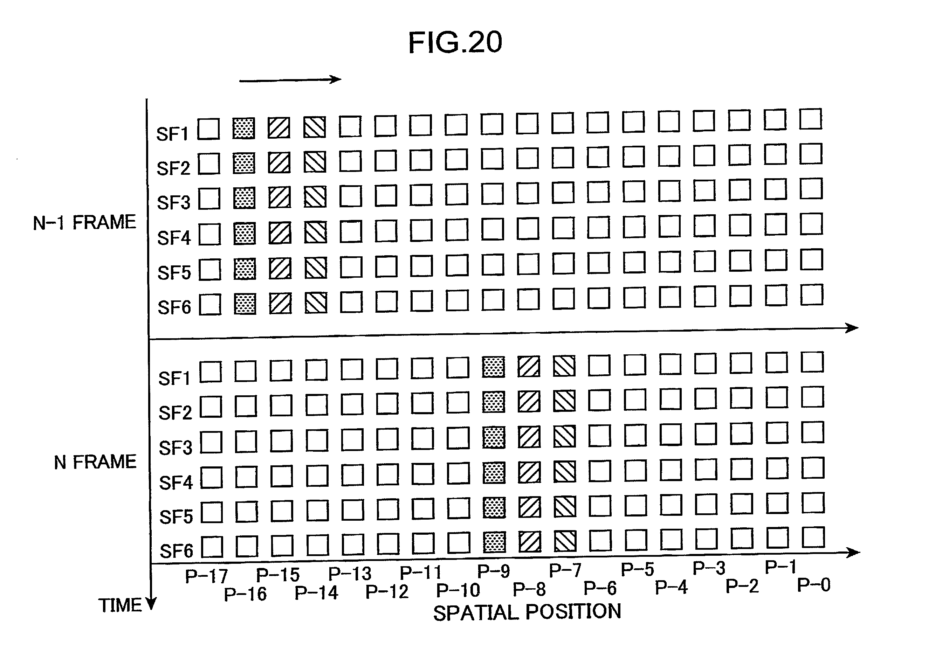

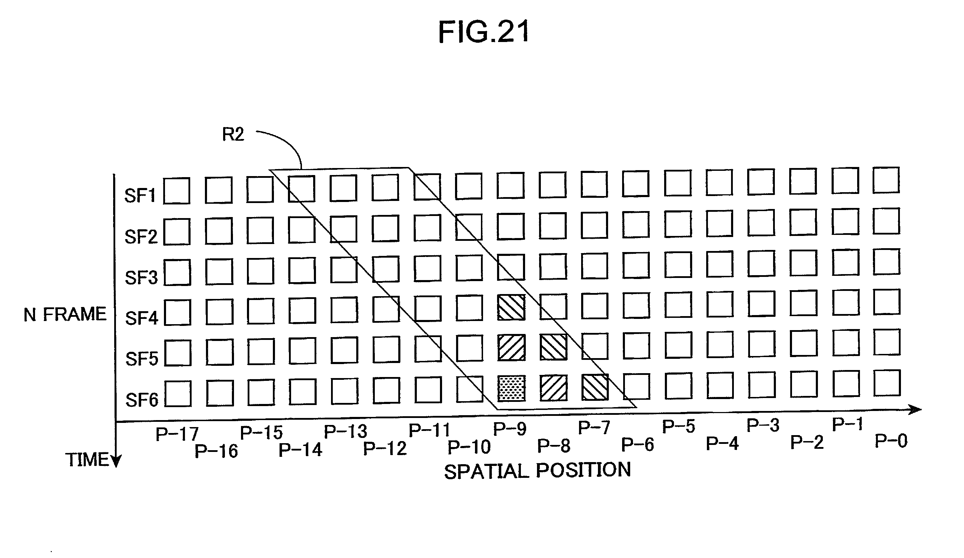

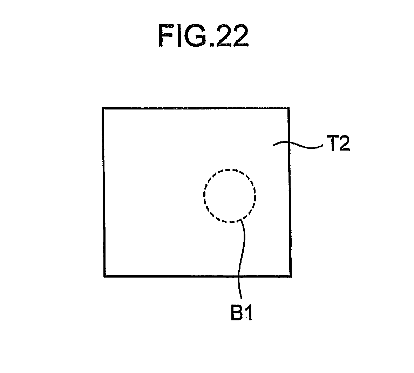

Fig. 19 illustrates an example of a display screen showing a state of a foreground image passing by in front of a background image, Fig. 20 is a schematic diagram depicting an example of the light emission data of each sub-field before rearranging the light emission data of each sub-field in an overlapping portion of the foreground image and the background image shown in Fig. 19, Fig. 21 is a schematic diagram depicting an example of the light emission data of each sub-field after rearranging the light emission data of each sub-field, and Fig. 22 is a diagram depicting an overlapping portion of the foreground image and the background image on the display screen in Fig. 19 after rearranging the light emission data of each sub-field.

On the display screen D5 shown in Fig. 19, a ball B1 which is a foreground image is passing in front of a tree T2 which is a background image. The tree T2 is stationary, and the ball B1 is moving to the right. The overlapping portion of the foreground image and the background image is shown in Fig. 20. In Fig. 20, the ball B1 in the N frame moved from the N-1 frame by seven pixels. Therefore the light emission data of the pixels P-14 to P-16 in the N-1 frame moved to the pixels P-7 to P-9 in the N frame. In Fig. 20, sub-fields belonging to a same pixel are indicated by a same hatching.

Here according to the conventional image display apparatus, the light emission data of each sub-field is rearranged according to the motion vector, and as Fig. 21 shows, the rearranged light emission data of each sub-field of each pixel in the N frame is created as follows.

The light emission data of the first to fifth sub-fields SF1 to SF5 of the pixels P-7 to P-9 moves to the left by five to one pixel(s), and the light emission data of the sixth sub-field SF6 of the pixels P-7 to P-9 is not changed.

The value of the motion vector of the pixels P-7 to P-9 is not 0, therefore for the sixth sub-field SF6 of the pixel P-7, the fifth to sixth sub-fields SF5 to SF6 of the pixel P-8, and the fourth to sixth sub-fields SF4 to SF6 of the pixel P-9, light emission data corresponding to the foreground image are rearranged respectively. However the value of the motion vector of the pixels P-10 to P-14 is 0, therefore for the third to fifth sub-fields SF3 to SF5 of the pixel P-10, the second to fourth sub-fields SF2 to SF4 of the pixel P-11, the first to third sub-fields SF1 to SF3 of the pixel P-12, the first to second sub-fields SF1 to SF2 of the pixel P-13, and the first sub-field SF 1 of the pixel P-14, it is unknown whether which of the light emission data corresponding to the background image or the light emission data corresponding to the foreground image is rearranged respectively.

The sub-fields in the area R2 indicated by a quadrangle in Fig. 21 shows a case when the light emission data corresponding to the background image is rearranged. If the light emission data corresponding to the background image is rearranged in the overlapping portion of the foreground image and the background image like this, the brightness of the ball B1 decreases, as shown in Fig. 22, the motion blur and the dynamic false contour occur in the overlapping portion of the ball B1 and the tree T2 are generated, and image quality drops.

Patent Document 1: Japanese Patent Application Laid-Open No. 2008-209671

### Summary of the Invention

It is an object of the present invention to provide an image processing apparatus and an image display apparatus, in which generation of motion blur and dynamic false contour can be more reliably prevented.

An image processing apparatus according to an aspect of the present invention is an image processing apparatus which divides one field or one frame into a plurality of sub-fields, and processes an input image so as to display gradation by combining a light emission sub-field where light is emitted and a non-emission sub-field where light is not emitted, the apparatus having: a sub-field conversion unit for converting the input image into light emission data of each sub-field; a motion vector detection unit for detecting a motion vector using at least two input images which have a time lag therebetween; and a regeneration unit for changing the light emission data of a sub-field corresponding to a pixel located at a position that is moved spatially backward by the number of pixels corresponding to the motion vector detected by the motion vector detection unit into light emission data of the sub-field of the pixel before moving, whereby the light emission data of each sub-field converted by the sub-field conversion unit is spatially rearranged, and the rearranged light emission data of each sub-field of the current frame is generated using sub-fields of at least two frames.

According to this configuration, an input image is converted into light emission data of each sub-field, and a motion vector is detected using at least two input images which have a time lag. Then the light emission data of a sub-field, corresponding to a pixel located at a position that is moved spatially backward by the number of pixels corresponding to the motion vector, is changed into light emission data of the sub-field of the pixel before moving, whereby the light emission data of each sub-field is spatially rearranged, and the rearranged light emission data of each sub-field of the current frame is generated using the sub-fields of at least two frames.

According to the present invention, the rearranged light emission data of each sub-field of the current frame is generated using the sub-fields of at least two frames, hence the light emission data of the sub-fields of another frame can be used for the sub-fields of the current frame where the light emission data is not rearranged, and motion blur and dynamic false contour generated around the boundary of a foreground image and a background image can be more reliably prevented.

The objects, characteristics and advantages of the present invention will be more obvious by the detailed description thereinbelow and by the accompanying drawings.

### Brief Description of the Drawings

Fig. 1 is a block diagram depicting a configuration of an image display apparatus according to an embodiment of the present invention.
Fig. 2 is a schematic diagram depicting an example of a light emission gravitational center value of each sub-field.
Fig. 3 is a schematic diagram depicting an example of rearranged light emission data after the first sub-field regeneration unit rearranged the sub-fields of the N frame shown in Fig. 16 according to the present embodiment.
Fig. 4 is a schematic diagram depicting an example of rearranged light emission data after the second sub-field regeneration unit rearranged the sub-fields of the N-1 frame shown in Fig. 16 according to the present embodiment.
Fig. 5 is a schematic diagram depicting an example of the rearranged light emission data after the sub-fields of the N frame and the sub-fields of the N-1 frame are combined according to the present embodiment.
Fig. 6 is a diagram depicting a boundary portion of a foreground image and a background image on the display screen shown in Fig. 15 after rearranging the light emission data of each sub-field according to the present embodiment.
Fig. 7 is a schematic diagram depicting an example of the light emission data of each sub-field after rearranging the sub-fields shown in Fig. 20 according to the present embodiment.
Fig. 8 is a diagram depicting a boundary portion of a foreground image and a background image on the display screen shown in Fig. 19 after rearranging the light emission data of each sub-field according to the present embodiment.
Fig. 9 is a diagram depicting an example of a display screen showing a state where a first image and a second image moving in opposite directions enter behind each other in an area around the center of the screen.
Fig. 10 is a schematic diagram depicting an example of the light emission data of each sub-field before rearranging the light emission data of each sub-field in the boundary portion between the first image and the second image shown in Fig. 9.
Fig. 11 is a schematic diagram depicting an example of the light emission data of each sub-field after rearranging the light emission data of each sub-field by the rearrangement method according to the present embodiment.
Fig. 12 is a schematic diagram depicting an example of a transition state of a display screen.
Fig. 13 is a schematic diagram depicting the light emission data of each sub-field before rearranging the light emission data of each sub-field when the display screen in Fig. 12 is displayed.
Fig. 14 is a schematic diagram depicting the light emission data of each sub-field after rearranging the light emission data of each sub-field when the display screen in Fig. 12 is displayed.
Fig. 15 illustrates an example of a display screen showing a state of a background image passing behind a foreground image.
Fig. 16 is a schematic diagram depicting an example of the light emission data of each sub-field before rearranging the light emission data of each sub-field in a boundary portion between the foreground image and the background image shown in Fig. 15.
Fig. 17 is a schematic diagram depicting an example of the light emission data of each sub-field after rearranging the light emission data of each sub-field.
Fig. 18 is a diagram depicting a boundary portion of the foreground image and the background image on the display screen shown in Fig. 15 after rearranging the light emission data of each sub-field.
Fig. 19 illustrates an example of a display screen showing a state of a foreground image passing in front of a background image.
Fig. 20 is a schematic diagram depicting an example of light emission data of each subdata before rearranging the light emission data of each sub-field in an overlapping portion of the foreground image and the background image shown in Fig. 19.
Fig. 21 is a schematic diagram depicting an example of the light emission data of each sub-field after rearranging the light emission data of each sub-field.
Fig. 22 is a diagram depicting an overlapping portion of the foreground image and the background image on the display screen shown in Fig. 19 after rearranging the light emission data of each sub-field.

### Best Mode for Carrying Out the Invention

An image display apparatus according to the present invention will now be described with reference to the drawings. In the following embodiment, a plasma display device will be described as an example of the image display apparatus, but the image display apparatus to which the present invention is applied is not especially limited to this example, but may be other image display apparatuses, only if one field or one frame is divided into a plurality of sub-fields to display gradation.

In the present description, the meaning of "sub-field" includes the "sub-field period", and the meaning of "light emission of a sub-field" includes the "light emission of a pixel in a sub-field period". The light emission period of a sub-field means a period of sustaining light emission by sustaining discharge so that a viewer can visually recognize the light emission, without including an initialization period and a write period when light emission which a viewer can visually recognize is not performed, and a non-light emission period, just before a sub-field, means a period when light emission which a viewer can visually recognize, is not performed, and this includes an initialization period, write period and sustaining period when light emission which a viewer can visually recognize is not performed.

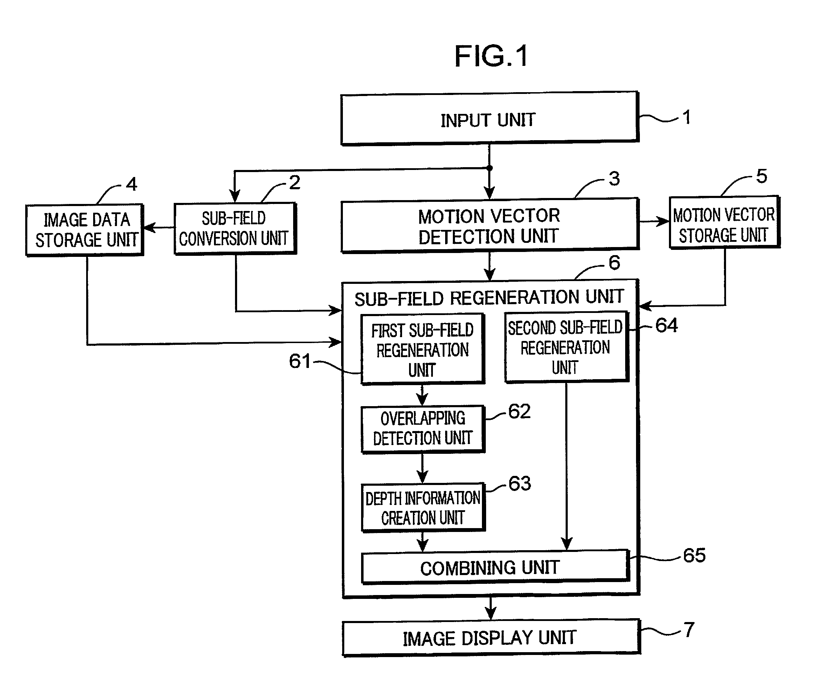

Fig. 1 is a block diagram depicting a configuration of an image display apparatus according to an embodiment of the present invention. The image display apparatus shown in Fig. 1 has an input unit 1, a sub-field conversion unit 2, a motion vector detection unit 3, an image data storage unit 4, a motion vector storage unit 5, a sub-field regeneration unit 6, and an image display unit 7. The sub-field conversion unit 2, the motion vector detection unit 3, the image data storage unit 4, the motion vector storage unit 5 and the sub-field regeneration unit 6 constitute an image processing apparatus which divides one field or one frame into a plurality of sub-fields, and processes an input image so as to display gradation by combining a light emission sub-field where light is emitted and a non-emission sub-field where light is not emitted.

The input unit 1 has a tuner for TV broadcasting, an image input terminal, a network connection terminal, for example, and moving image data is input to the input unit 1. The input unit 1 performs a known conversion processing on the moving image data which was input, and outputs frame image data after the conversion processing to the sub-field conversion unit 2 and the motion vector detection unit 3.

The sub-field conversion unit 2 sequentially converts one frame image data, that is, image data of one field, into the light emission data of each sub-field, and outputs the result to the image data storage unit 4 and the sub-field regeneration unit 6. In the following description, the image data converted into the light emission data of each sub-field is also called "sub-field data".

Now a gradation representation method for representing gradation using sub-fields will be described. One field is constituted by K number of sub-fields, each sub-field is weighted with a predetermined weight corresponding to brightness, and an emission period is set so that the brightness of each sub-field changes according to this weighting. For example, if seven sub-fields are used and weighted with the Kth power of 2, then the weights of the first to seventh sub-fields are 1, 2, 4, 8, 16, 32 and 64 respectively, and an image can be represented in a 0 to 127 gradation range by combining a light emission state and a non-light emission state of each sub-field. The number of divisions and weighting of sub-fields are not limited to the above example, but may be changed in various ways.

Two frame image data, which are continuous in time, such as the image data of an N-1 frame and image data of an N frame, are input to the motion vector detection unit 3, and the motion vector detection unit 3 detects a motion vector for each pixel of the N frame by detecting the moving distance between these frames, and outputs the result to the motion vector storage unit 5 and the sub-field regeneration unit 6. For this motion vector detection method, a known motion vector detection method is used, such as a detection method using matching processing for each block.

The image data storage unit 4 stores at least the image data of an immediately preceding frame which is converted into the light emission data of each sub-field by the sub-field conversion unit 2. The motion vector storage unit 5 stores at least the motion vector of each pixel of the image data of the immediately preceding frame, detected by the motion vector detection unit 3.

The sub-field regeneration unit 6 changes the light emission data of a sub-field corresponding to a pixel located at a position that is moved spatially backward by the number of pixels corresponding to the motion vector detected by the motion vector detection unit 3, into light emission data of the sub-field of the pixel before moving, whereby the light emission data of each sub-field converted by the sub-field conversion unit 2 is spatially rearranged, and the rearranged light emission data of each sub-field of the current frame is generated using the sub-fields of at least two frames. In a plane specified by the direction of the motion vector, the sub-field regeneration unit 6 changes the light emission data, corresponding to a pixel located at a position that is moved two-dimensionally backward, into the light emission data of the sub-field of the pixel before moving.

In concrete terms, for the light emission data of a sub-field which is not rearranged, the sub-field regeneration unit 6 uses the light emission data of the sub-field in the image data of the immediately preceding frame that is stored in the image storage unit 4. The sub-field regeneration unit 6 includes a first sub-field regeneration unit 61, an overlapping detection unit 62, a depth information creation unit 63, a second sub-field regeneration unit 64, and a combining unit 65.

Just like the rearrangement method depicted in Fig. 14, the first sub-field regeneration unit 61 changes the light emission data of a sub-field, corresponding to a pixel located at a position that is moved spatially backward by the number of pixels corresponding to the motion vector, into the light emission data of the sub-field of the pixel before moving, so that the sub-field with more precedence in time moves a further distance according to the arrangement sequence of the sub-fields of each pixel of the current frame.

The overlapping detection unit 62 detects an overlapping of a foreground image and a background image. If an overlapping is detected by the overlapping detection unit 62, the depth information creation unit 63 creates depth information for each pixel where a foreground image and a background image are overlapping, to indicate whether the pixel is the foreground image or the background image. The depth information creation unit 63 creates the depth information based on the magnitude of the motion vector in at least two frames.

Based on the depth information created by the depth information creation unit 63, the first sub-field regeneration unit 61 generates the rearranged light emission data of each sub-field. If an overlapping is detected by the overlapping detection unit 62, for the pixels constituting the foreground image, the first sub-field regeneration unit 61 changes the light emission data of a sub-field corresponding to a pixel located at a position that is moved spatially backward by the number of pixels corresponding to the motion vector detected by the motion vector detection units 3, into the light emission data of the sub-field of the pixel before moving.

Here the above mentioned sub-field rearrangement method will be described in concrete terms. First a light emission gravitational center value will be described. The light emission gravitational center value is a value generated by normalizing a light emission position of each sub-field with one frame (0 to 1), and a moving distance D [pixels] of each sub-field is given by D = V × G, where V [pixels/frame] denotes a motion vector, and G denotes a light emission gravitational center value, and the moving distance of each sub-field according to the moving vector can be calculated using the light emission gravitational center value of each sub-field.

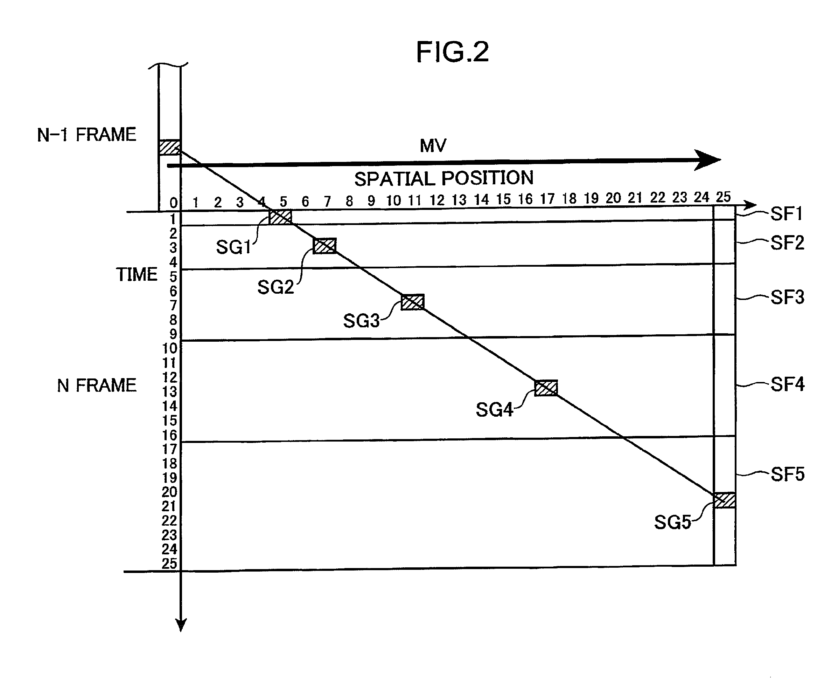

Fig. 2 is a schematic diagram depicting an example of a light emission gravitational center value of each sub-field. As Fig. 2 illustrates, if one frame is normalized with 0 to 25, and emission periods of the first to fifth sub-fields are 1, 3, 5, 7 and 9 respectively, then the light emission gravitational center value SG1 of the first sub-field SF1 is 0.8 (= (25-5)/25), the light emission gravitational center value SG2 of the second sub-field SF2 is 0.72 (= (25-7)/25), the light emission gravitational center value SG3 of the third sub-field SF3 is 0.56 (= (25-11)/25), the light emission gravitational center value SG4 of the fourth sub-field SF4 is 0.32 (= (25-7)/25), and the light emission gravitational center value SG5 of the fifth sub-field SF5 is 0.0 (= (25-25)/25).

If 25 (pixels/frame) in the x direction (horizontal direction on the display screen) and 0 (pixels/frame) in the y direction (vertical direction on the display screen) are detected as the motion vector MV of the N-1 frame and N frame at this time, the moving distance values (x, y) [pixels] of the first to fifth sub-fields SF1 to SF5 are (20, 0), (18, 0), (14, 0), (8, 0) and (0, 0) respectively based on the above mentioned D = V × G. These values are not values on the abscissa in Fig. 2, but are a number of pixels from the light emission gravitational center value SG5 of the fifth sub-field SF5 to the respective light emission gravitational values SG1 to SG5 of the first to the fifth sub-fields SF1 to SF5.

The second sub-field regeneration unit 64 reads the sub-field data of the immediately preceding frame stored in the image data storage unit 4, and reads the motion vector of each pixel of the image data of the immediately preceding frame stored in the motion vector storage unit 5, inverts the direction of the motion vector of each pixel of the sub-field data of the immediately preceding frame, normalizes the light emission gravitational center values which are normalized with values 0 to 1 with 1 to 0, and changes the light emission data of a sub-field, corresponding to a pixel located at a position that is moved spatially backward by the number of pixels corresponding to the motion vector, into the light emission data of the sub-fields of the pixel before moving, so as to generate the rearranged light emission data of each sub-field.

Here the light emission gravitational center value is a value (0 to 1) generated by normalizing the light emission position of each sub-field with one frame, and is used for calculating the moving distance of each sub-field. In other words, the moving distance of each sub-field is calculated by multiplying the light emission gravitational center value by the motion vector value. Normally the light emission gravitational center value is normalized with values 0 to 1, but if this value is normalized with values 1 to 0, the light emission data of each sub-field is arranged in a vertically inverted state.

The combining unit 65 combines the rearranged light emission data generated by the first sub-field regeneration unit 61 and the rearranged light emission data generated by the second sub-field regeneration unit 64.

The image display unit 7 has a plasma display panel and a panel drive circuit, and displays moving images by controlling ON or OFF of each sub-field of each pixel of the plasma display panel, based on the rearranged light emission data generated by the sub-field regeneration unit 6.

Now a light emission data rearrangement processing by the image display apparatus constructed like this will be described in concrete terms. First moving image data is input to the input unit 1, and the input unit 1 performs predetermined conversion processing on the moving image data which was input, and outputs the frame image data after conversion processing to the sub-field conversion unit 2 and the motion vector detection unit 3.

Then the sub-field conversion unit 2 sequentially converts the frame image data, for each pixel, into the light emission data of the first to sixth sub-fields SF1 to SF6, and outputs the light emission data to the sub-field regeneration unit 6 and the image data storage unit 4.

For example, it is assumed that the moving image data illustrated in Fig. 15, where a car C1, which is a background image passes behind a tree T1 which is a foreground image, is input to the input unit 1. In this case, the pixels around the boundary of the tree T1 and the car C1 are converted into the light emission data of the first to sixth sub-fields SF1 to SF6, as shown in Fig. 16. As Fig. 16 shows, the sub-field conversion unit 2 sets the first to sixth sub-fields SF1 to SF6 of the pixels P-0 to P-8 to a light emission state corresponding to the tree T1, and generates light emission data in which the first to sixth sub-fields SF1 to SF6 of the pixels P-9 to P-17 are set to a light emission state corresponding to the car C1. Therefore if the sub-fields are not rearranged, an image generated by the sub-fields in Fig. 16 is displayed on the display screen.

The image data storage unit 4 stores the sub-field data converted by the sub-field conversion unit 2. The image data storage unit 4 stores the sub-field data of the current frame (N frame) and the sub-field data of the immediately preceding frame (N-1 frame).

In parallel with the creation of the light emission data of the first to sixth sub-fields SF1 to SF6, the motion vector detection unit 3 detects a motion vector of each pixel between two frame image data which are continuous in time, and outputs it to the sub-field regeneration unit 6 and the motion vector storage unit 5.

The motion vector storage unit 5 stores a motion vector for each pixel of the frame image data which the motion vector detection unit 3 detected. The motion vector storage unit 5 stores a motion vector of each pixel of the frame image data of the current frame (N frame), and a motion vector of each pixel of the frame image data of the immediately preceding frame (N-1 frame).

Then the first sub-field regeneration unit 61 changes the light emission data of a sub-field corresponding to a pixel located at a position that is moved spatially backward, by the number of pixels corresponding to the motion vector, into the light emission data of the sub-field of the pixel before moving, so that the sub-field with more precedence in time moves a further distance, according to the arrangement sequence of the first to sixth sub-fields SF1 to SF6 of the N frame. Thereby the first sub-field regeneration unit 61 spatially rearranges the light emission data of each sub-field which was converted by the sub-field conversion unit 2, and generates the rearranged light emission data of each sub-field.

Then the overlapping detection unit 62 detects an overlapping of a foreground image and a background image for each sub-field. In concrete terms, when the first sub-field regeneration unit 61 rearranges the light emission data of each sub-field, the overlapping detection unit 62 counts a number of times when the light emission data is written for each sub-field, and if the write count is 0, the sub-field is detected as a non-setting portion where the light emission data is not set, and if the write count is 2 or more, the sub-field is detected as an overlapping portion of the foreground image and the background image.

In the case when a non-setting portion where the light emission data is not rearranged or an overlapping portion, where a foreground image and a background image overlap, is not detected, the overlapping detection unit 62 outputs the rearranged light emission data, generated by the first sub-field regeneration unit 61, to the image display unit 7.

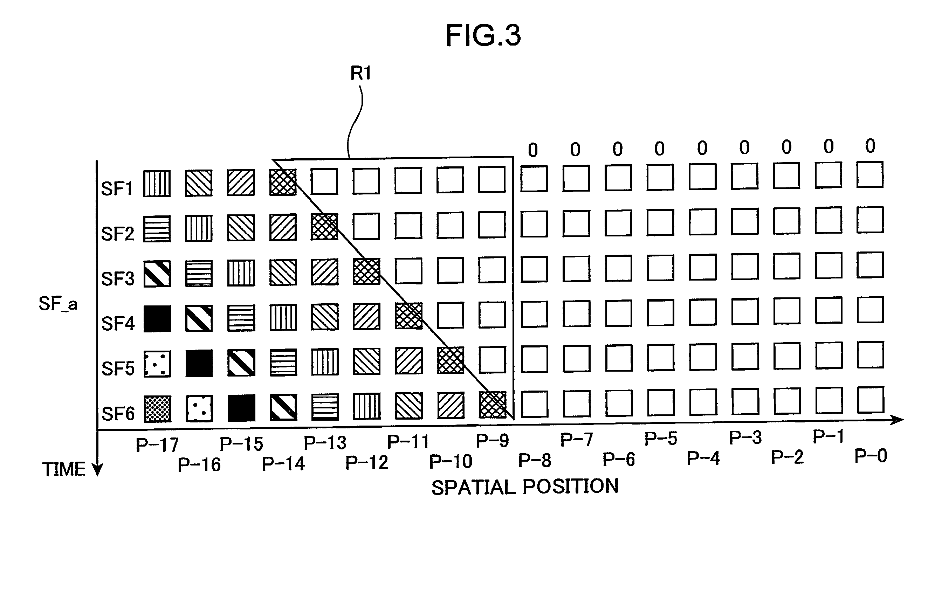

Fig. 3 is a schematic diagram depicting an example of the rearranged light emission data after the sub-fields of the N frame shown in Fig. 16 are rearranged by the first sub-field regeneration unit according to the present embodiment. The rearranged light emission data SF_a shown in Fig. 3 is the same as the rearranged light emission data shown in Fig. 17, hence detailed description thereof is omitted.

In Fig. 3, the pixels P-0 to P-8 are included in the still image, and the value of the motion vector is 0. Therefore for the sub-fields in the area R1 of the rearranged light emission data SF_a, the emission data is not written, that is the light emission data is not set.

If a non-setting portion where the light emission data is not set is detected by the overlapping detection unit 62, the second sub-field regeneration unit 64 reads the sub-field data of the N-1 frame which is stored in the image data storage unit 4, and reads the motion vector of each pixel of the frame image data of the N-1 frame stored in the motion vector storage unit 5.

Then the second sub-field regeneration unit 64 inverts the direction of the motion vector of each pixel of the frame image data of the N-1 frame, and normalizes the light emission gravitational center values of each sub-field, which is normalized with 0 to 1 of the sub-field data of the N-1 frame, with 1 to 0. By inverting the direction of the motion vector of each pixel, the light emission data moves in the reverse direction of the rearranged light emission data SF_a shown in Fig. 3. Also by normalizing the light emission gravitational center value of each sub-field, which is normalized with 0 to 1, with 1 to 0, the light emission data of each sub-field moves, so that the sub-field with more precedence in time moves a less distance, according to the arrangement sequence of the first to sixth sub-fields SF1 to SF6, and as a result the light emission data of each sub-field is vertically inverted.

Then the second sub-field regeneration unit 64 changes the light emission data of a sub-field corresponding to a pixel located at a position that is moved spatially backward by the number of pixels corresponding to the motion vector into the light emission data of the sub-field of the pixel before moving, so that the sub-field with more precedence in time moves a less distance, according to the arrangement sequence of the first to sixth sub-fields SF1 to SF6 of the N-1 frame where the motion vector was inverted, and the light emission gravitational center value was normalized with 1 to 0.

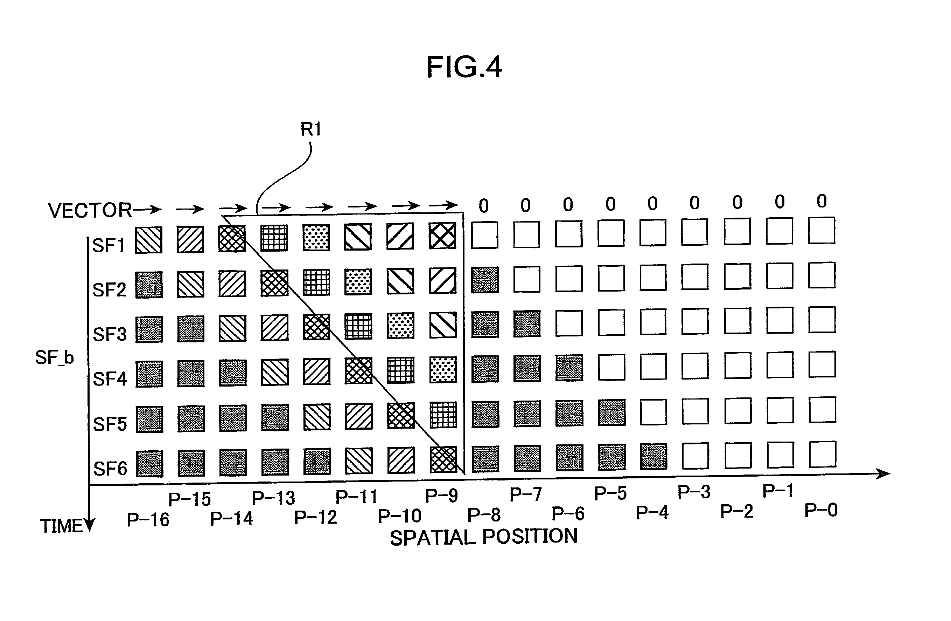

Fig. 4 is a schematic diagram depicting an example of the rearranged light emission data after the sub-fields of the N-1 frame shown in Fig. 16 are rearranged by the second sub-field regeneration unit according to the present embodiment.

The second sub-field regeneration unit 64 rearranges the light emission data of each sub-field according to the motion vector, and after the rearrangement of each sub-field of each pixel in the N-1 frame, the rearranged light emission data SF_b is created as shown in Fig. 4.

In other words, the light emission data of the second to sixth sub-fields SF2 to SF6 of the pixel P-16 is changed to the light emission data of the second to sixth sub-fields SF2 to SF6 of the pixels P-15 to P-11, and the light emission data of the first sub-field SF1 of the pixel P-16 is not changed. The light emission data of the second to sixth sub-fields SF2 to SF6 of the pixel P-15 is changed into the light emission data of the second to sixth sub-fields SF2 to SF6 of the pixels P-14 to P-10, and the light emission data of the first sub-field SF1 of the pixel P-15 is not changed.

The light emission data of the second to sixth sub-fields SF2 to SF6 of the pixel P-14 is changed to the light emission data of the second to sixth sub-fields SF2 to SF6 of the pixels P-13 to P-9, and the light emission data of the first sub-field SF1 of the pixel P-14 is not changed. The light emission data of the second to sixth sub-fields SF2 to SF6 of the pixel P-13 is changed to the light emission data of the second to sixth sub-fields SF2 to SF6 of the pixels P-12 to P-8, and the light emission data of the first sub-field SF1 of the pixel P-13 is not changed.

The light emission data of the second to sixth sub-fields SF2 to SF6 of the pixel P-12 is changed to the light emission data of the second to sixth sub-fields SF2 to SF6 of the pixels P-11 to P-7, and the light emission data of the first sub-field SF1 of the pixel P-12 is not changed. The light emission data of the second to sixth sub-fields SF2 to SF6 of the pixel P-11 is changed to the light emission data of the second to sixth sub-fields SF2 to SF6 of the pixels P-10 to P-6, and the light emission data of the first sub-field SF1 of the pixel P-11 is not changed.

The light emission data of the second to sixth sub-fields SF2 to SF6 of the pixel P-10 is changed to the light emission data of the second to sixth sub-fields SF2 to SF6 of the pixels P-9 to P-5, and the light emission data of the first sub-field SF1 of the pixel P-10 is not changed. The light emission data of the second to sixth sub-fields SF2 to SF6 of the pixel P-9 is changed to the light emission data of the second to sixth sub-fields SF2 to SF6 of the pixels P-8 to P-4, and the light emission data of the first sub-field SF1 of the pixel P-9 is not changed.

In this way, the second sub-field regeneration unit 64 spatially rearranges the light emission data of each sub-field of the N-1 frame where the motion vector is inverted, and the light emission gravitational center values are normalized with 1 to 0, and generates the rearranged light emission data SF_b of each sub-field.

Then the combining unit 65 combines the rearranged light emission data SF_a of the N frame created by the first sub-field regeneration unit 61 and the rearranged light emission data SF_b created by the second sub-field regeneration unit 64. In concrete terms, the combining unit 65 sets the light emission data of the sub-fields of the rearranged light emission data SF_b corresponding to the non-setting portion in the sub-fields of the non-setting portion of the rearranged light emission data SF_a detected by the overlapping detection unit 62. The light emission data of the sub-fields in the area R1 of the rearranged light emission data SF_b is set in the light emission data of the sub-fields in the area R1 of the non-setting portion of the rearranged light emission data SF_a.

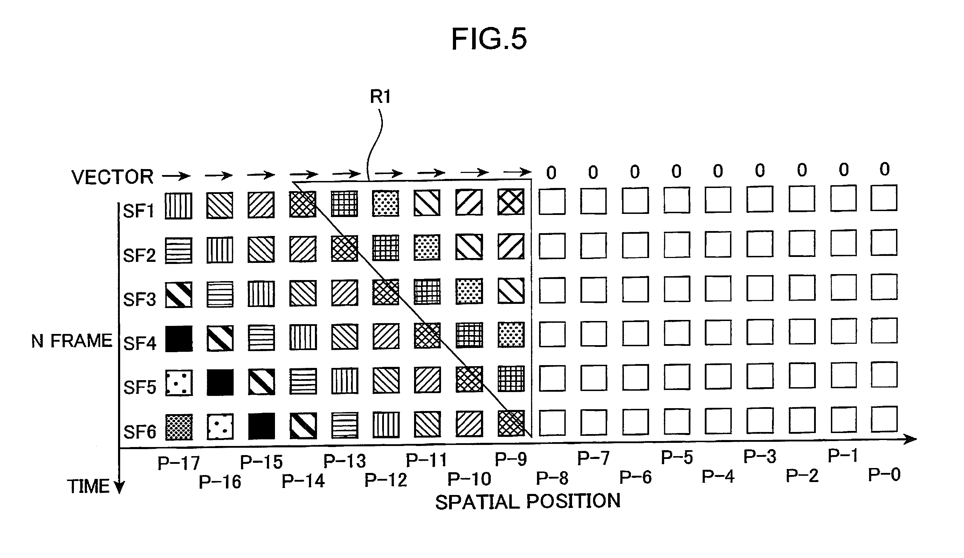

Fig. 5 is a schematic diagram depicting an example of the rearranged light emission data after combining the sub-fields in the N frame and the sub-fields in the N-1 frame according to the present embodiment.

By the above mentioned sub-field rearrangement processing, the light emission data of the first to fifth sub-fields SF1 to SF5 of the pixel P-9, the light emission data of the first to fourth sub-fields SF1 to SF4 of the pixel P-10, the light emission data of the first to third sub-fields SF1 to SF3 of the pixel P-11, the light emission data of the first and second sub-fields SF1 and SF2 of the pixel P-12 and the light emission data of the first sub-field SF1 of the pixel P-13 in the rearranged light emission data SF_a of the N frame created by the first sub-field regeneration unit 61 are set to the light emission data of the first to fifth sub-fields SF1 to SF5 of the pixel P-9, the light emission data of the first to fourth sub-fields SF1 to SF4 of the pixel P-10, the light emission data of the first to third sub-fields SF1 to SF3 of the pixel P-11, the light emission data of the first and second sub-fields SF1 and SF2 of the pixel P-12, and the light emission data of the first sub-field SF1 of the pixel P-13 in the rearranged light emission data SF_b created by the second sub-field regeneration unit 64.

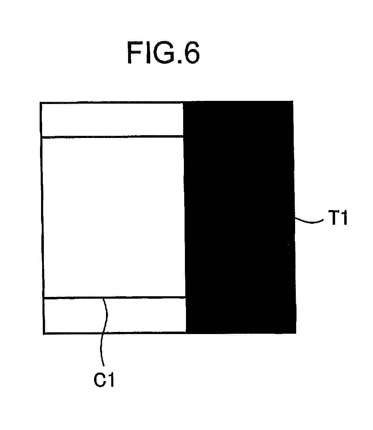

In other words, the light emission data of the sub-fields belonging to the car C1 is rearranged in the sub-fields of the area R1 indicated by the triangle in Fig. 5, whereby, as illustrated in Fig. 6, the boundary between the car C1 and the tree T1 becomes clear, motion blur and dynamic false contour are prevented, and image quality improves.

Now a case when the overlapping detection unit 62 detected an overlapping portion of a foreground image and a background image, where light emission data is written in one sub-field two or more times, will be described.

When the sub-fields of the moving image data where a foreground image passes in front of a background image are rearranged as illustrated in Fig. 19, two light emission data: the light emission data of the background image and the light emission data of the foreground image, are arranged in one sub-field, in a portion where the background image and the foreground image overlap. Therefore overlapping of the foreground image and the background image can be detected by counting a number of times of writing the light emission data for each sub-field.

If the overlapping detection unit 62 detects an overlapping portion, the depth information creation unit 63 calculates the depth information which indicates whether a pixel is the foreground image or the background image, for each pixel where the foreground image and the background image overlap. In concrete terms, the depth information creation unit 63 compares the values of the motion vectors of a same pixel in two or more frames, and if the value of the motion vector changes, this pixel is regarded as the foreground image, and if the value of the motion vector does not change, this pixel is regarded as the background image, and creates the depth information based on this determination. For example, the depth information creation unit 63 compares the vector values of a same pixel in the N frame and the N-1 frame.

If the overlapping detection unit 62 detects overlapping, the first sub-field regeneration unit 61 changes the light emission data of each sub-field of the overlapping portion into the light emission data of the sub-field of the pixel constituting the foreground image specified by the depth information created by the depth information creation unit 63.

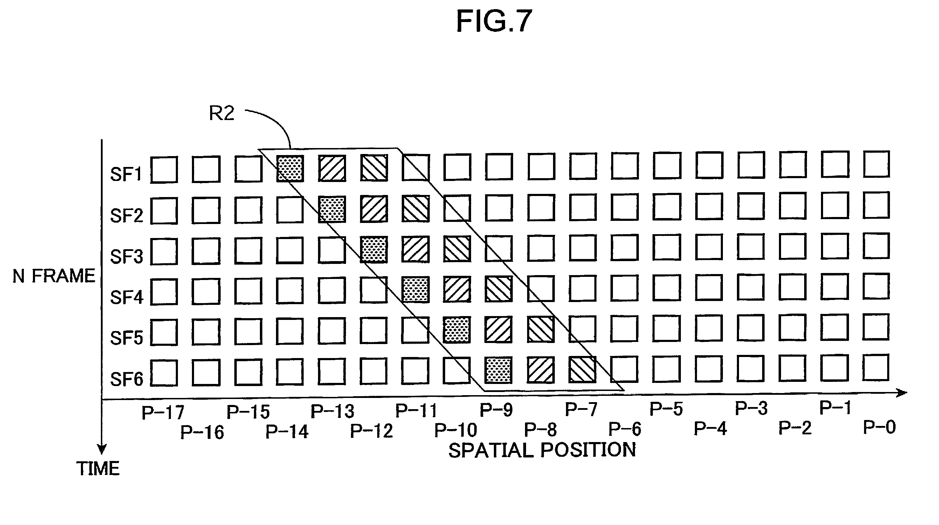

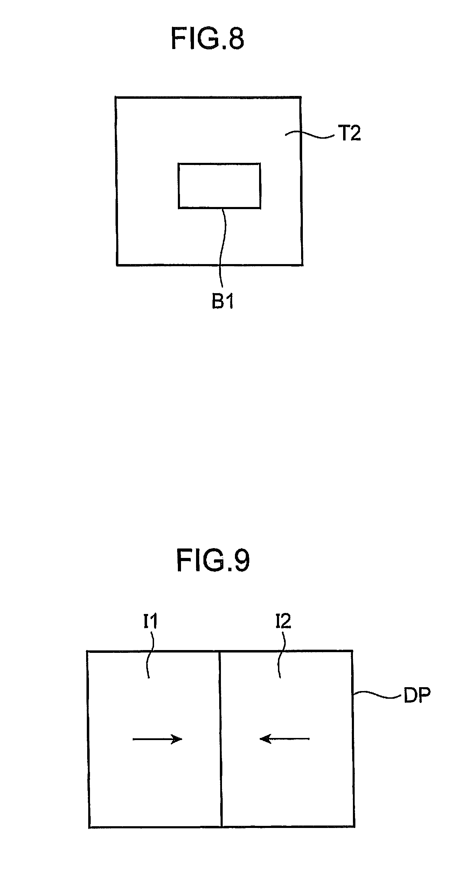

Fig. 7 is a schematic diagram depicting an example of the light emission data of each sub-field after the sub-fields shown in Fig. 20 are rearranged according to the present embodiment, and Fig. 8 is a diagram depicting a boundary portion of the foreground image and the background image on the display screen shown in Fig. 19 after rearranging the light emission data of each sub-field according to the present embodiment.

Here the first sub-field regeneration unit 61 rearranges the light emission data of each sub-field according to the motion vector, and, as shown in Fig. 7, the light emission data after rearranging each sub-field of each pixel in the N frame is created as follows.

First the first sub-field regeneration unit 61 changes the light emission data of a sub-field corresponding to a pixel located at a position that is moved spatially backward by the number of pixels corresponding to the motion vector into the light emission data of the sub-field of the pixel before moving, so that the sub-field with more precedence in time moves a further distance, according to the arrangement sequence of the first to sixth sub-fields SF1 to SF6.

Then the overlapping detection unit 62 counts a number of times of writing the light emission data to each sub-field. In the case of the rearranged light emission data shown in Fig. 21, the write count is 2 for the first sub-field SF1 of the pixel P-14, the first and second sub-fields SF1 and SF2 of the pixel P-13, the first to third sub-fields SF1 to SF3 of the pixel P-12, the second to fourth sub-fields SF2 to SF4 of the pixel P-11, the third to fifth sub-fields SF3 to SF5 of the pixel P-10, hence the overlapping detection unit 62 detects these sub-fields as the overlapping portions of the foreground image and the background image.

Then the depth information creation unit 63 compares the values of the motion vectors in a same pixel between the N frame and the N-1 frame before rearrangement, and if the values of the motion vectors changed, this pixel is regarded as the foreground image, and if the values of the motion vectors did not change, this pixel is regarded as the background image, and the depth information is created based on this data. For example, in the case of the N frame shown in Fig. 20, the pixels P-0 to P-6 are background images, the pixels P-7 to P-9 are foreground images, and the pixels P-10 to P-17 are background images.

The first sub-field regeneration unit 61 refers to the depth information corresponding to the pixel of the pre-movement sub-field of the sub-field which the overlapping detection unit 62 detected as the overlapping portion, and if the depth information is information that indicates the foreground image, the first sub-field regeneration unit 61 changes the light emission data of this sub-field into the light emission data of the sub-field of the pre-movement pixel, and if the depth information is information that indicates the background image, the first sub-field regeneration unit 61 does not change the light emission data of the sub-field into the light emission data of the sub-field of the pre-movement pixel.

Thereby as Fig. 7 shows, the light emission data of the first sub-field SF1 of the pixel P-14 is changed to the light emission data of the first sub-field SF1 of the pixel P-9, the light emission data of the first and second sub-fields SF1 and SF2 of the pixel P-13 is changed to the light emission data of the first sub-field SF1 of the pixel P-8 and the second sub-field SF2 of the pixel P-9, the light emission data of the first to third sub-fields SF1 to SF3 of the pixel P-12 is changed to the light emission data of the first sub-field SF1 of the pixel P-7, the second sub-field SF2 of the pixel P-8 and the third sub-field SF3 of the pixel P-9, the light emission data of the second to fourth sub-fields SF2 to SF4 of the pixel P-11 is changed to the light emission data of the second sub-field SF2 of the pixel P-7, the third sub-field SF3 of the pixel P-8 and the fourth sub-field SF4 of the pixel P-9, and the light emission data of the third to fifth sub-fields SF3 to SF5 of the pixel P-10 is changed to the light emission data of the third sub-field SF3 of the pixel P-7, and the fourth sub-field SF4 of the pixel P-8 and the fifth sub-field SF5 of the pixel P-9.

By the above mentioned sub-field rearrangement processing, the light emission data of the sub-fields of the foreground image is moved with priority in an overlapping portion of the foreground image and the background image. In other words, in the sub-fields in the area R2 indicated by the quadrangle in Fig. 7, the light emission data corresponding to the foreground image is rearranged. In this way, if the light emission data corresponding to the foreground image is rearranged in the overlapping portion of the foreground image and the background image, the brightness of the ball B1 increases as shown in Fig. 8, and the motion blur and the dynamic false contour are prevented in the overlapping portion of the ball B1 and the tree T2, and image quality improves.

In the present embodiment, the depth information creation unit 63 creates, for each pixel, the depth information, which indicates whether the pixel is the foreground image or the background image based on the magnitude of the motion vector in at least two frames, but the present invention is not limited to this. In other words, if the depth information to indicate whether the pixel is the foreground image or the background image is included in advance in the input image which is input in the input unit 1, it is unnecessary to create the depth information. In this case, the depth information is extracted from the input image which is input in the input unit 1. The depth information creation unit 63 may detect an object from the input image signals, so as to determine the depth information according to the movement of the object. The depth information creation unit 63 may detect characters and create the depth information regarding the characters as the foreground image if such characters are detected.

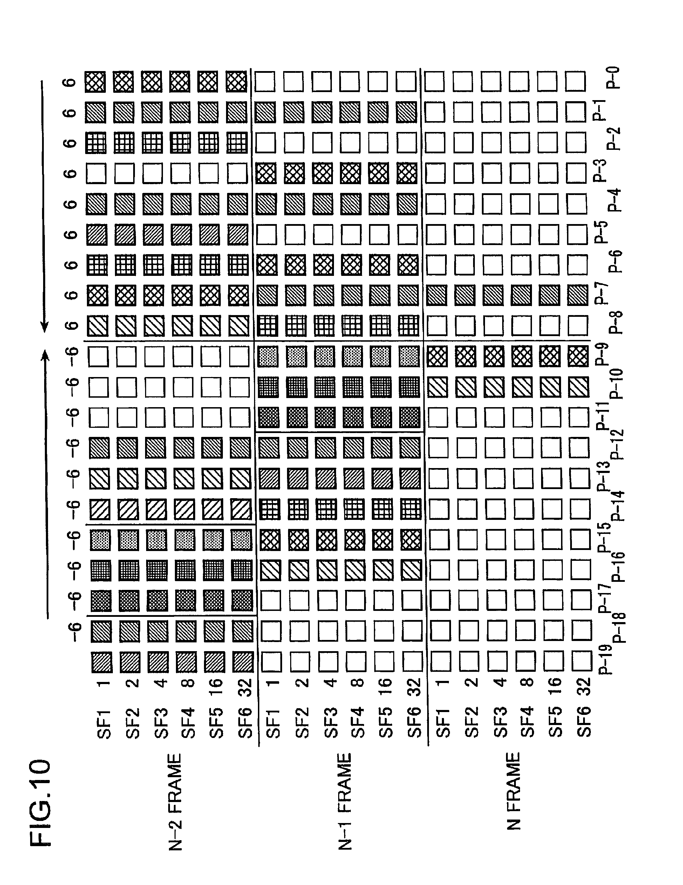

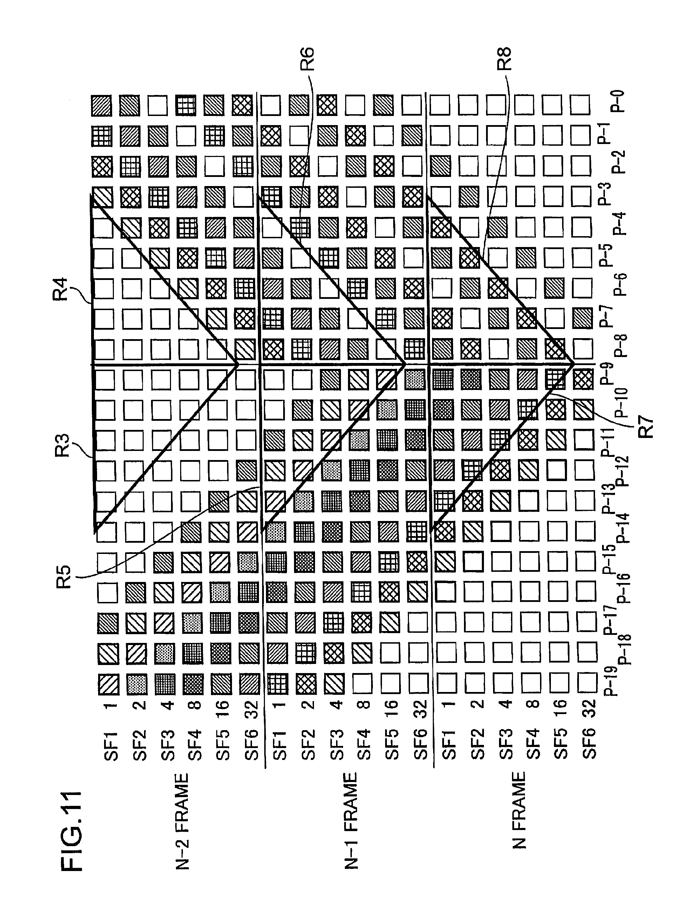

Another example of the sub-field rearrangement processing will be described. Fig. 9 is a diagram depicting an example of a display screen where a first image and a second image moving in opposite directions enter behind each other in an area around the center of the screen, Fig. 10 is a schematic diagram depicting an example of the light emission data of each sub-field before rearranging the light emission data of each sub-field in the boundary portion of the first image and the second image in Fig. 9, and Fig. 11 is a schematic diagram depicting an example of the light emission data of each sub-field after rearranging the light emission data of each sub-field using the rearrangement method according to the present embodiment.

On the display screen DP shown in Fig. 9, a first image I1 moving to the right, and a second image I2 moving to the left, enter behind each other in an area around the center of the screen. In Fig. 9 to Fig. 11, a value of the motion vector of each pixel of the first image I1 is "-6", and a value of the motion vector of each pixel of the second image I2 is "6".

As Fig. 10 shows, before the sub-field rearrangement processing, the first image I1 is constituted by pixels P-9 to P-19, and the second image I2 is constituted by pixels P-0 to P-8.

If the light emission data of each sub-field in the N-2 frame, N-1 frame and N frame shown in Fig. 10 are rearranged by a conventional rearrangement method, the light emission data of the sub-fields of the triangular areas R3 to R8 near the boundary of the first image I1 and the second image I2 shown in Fig. 11 are not rearranged, and enter a non-setting state.

In this case, sufficient brightness cannot be provided in the boundary portion between the first image I1 and the second image I2, where motion blur and dynamic false contour are generated, and image quality drops. If the light emission data is moved beyond the boundary of the first image I1 and the second image I2, motion blur and dynamic false contour are generated in the boundary portion, and image quality drops.

If the light emission data of each sub-field of the N-2 frame, N-1 frame and N frame shown in Fig. 10 is rearranged by the rearrangement method of the present embodiment, on the other hand, the rearranged light emission data is generated for the light emission data of the sub-fields in the areas R3 to R8 based on each sub-field data of the immediately preceding frame, as shown in Fig. 11. In other words, the rearranged light emission data is generated using the sub-field data in the N-3 frame (not illustrated), for the sub-fields of the areas R3 and R4 in the N-2 frame, the rearranged light emission data is generated using the sub-field data in the N-2 frame for the sub-fields of the areas R5 and R6 in the N-1 frame, and the rearranged light emission data is generated using the sub-field data in the N-1 frame, for the sub-fields in the areas R7 and R8 in the N frame.

According to the present embodiment, the boundary between the first image I1 and the second image I2 becomes clear, and motion blur and dynamic false contour, which are generated in a boundary portion where the directions of the motion vectors are discontinuous, can be more reliably prevented.

According to the present embodiment, the image data storage unit 4 stores image data in the N-1 frame converted by the sub-field conversion unit 2, but the present invention is not limited to this, and the image data storage unit 4 may store the image data in the N-1 frame before being converted into sub-field data, which is output from the input unit 1. If the rearranged light emission data is generated by the second sub-field regeneration unit 64, the sub-field conversion unit 2 reads the image data in the N-1 frame from the image data storage unit 4, sequentially converts the read image data in the N-1 frame into the light emission data of each sub-field, and outputs the converted data to the sub-field regeneration unit 6.

The above mentioned embodiment primarily includes the invention having the following configuration.

An image processing apparatus according to an aspect of the present invention is an image processing apparatus which divides one field or one frame into a plurality of sub-fields, and processes an input image so as to display gradation by combining a light emission sub-field where light is emitted and a non-light emission sub-field where light is not emitted, the apparatus having: a sub-field conversion unit that converts the input image into light emission data of each sub-field; a motion vector detection unit that detects a motion vector using at least two input images which have a time lag therebetween; and a regeneration unit that changes the light emission data of a sub-field corresponding to a pixel located at a position that is moved spatially backward by the number of pixels corresponding to the motion vector detected by the motion vector detection unit into the light emission data of the sub-field of the pixel before moving, whereby the light emission data of each sub-field converted by the sub-field conversion unit is spatially rearranged, and the rearranged light emission data of each sub-field of a current frame is generated using sub-fields of at least two frames.

According to this configuration, an input image is converted into light emission data of each sub-field, and a motion vector is detected using at least two input images which have a time lag. Then the light emission data of a sub-field, corresponding to a pixel located at a position that is moved spatially backward by the number of pixels corresponding to the motion vector, is changed into light emission data of the sub-field of the pixel before moving, whereby the light emission data of each sub-field is spatially rearranged, and the rearranged light emission data of each sub-field of the current frame is generated using the sub-fields of at least two frames.

In some cases, when the light emission data of a sub-field corresponding to a pixel located at a position that is moved spatially backward by the number of pixels corresponding to the motion vector is changed to the light emission data of the sub-field of the pixel before moving, light emission data may not be rearranged in an area near the boundary of a foreground image and a background image, but since the rearranged light emission data of each sub-field of the current frame is generated using the sub-fields in at least two frames, light emission data of the sub-fields of another frame can be used for the sub-fields of the current frame where the light emission data is not rearranged, and as a consequence, motion blur and dynamic false contour, which are generated around the boundary of the foreground image and the background image, can be more reliably prevented.

It is preferable that the above mentioned image processing apparatus further comprises a storage unit that stores image data in the immediately preceding frame converted by the sub-field conversion unit, wherein the regeneration unit uses light emission data of a sub-field of the immediately preceding frame stored in the storage unit, for the light emission data of a sub-field which has not been rearranged.

According to this configuration, the image data in the immediately preceding frame is stored in the storage unit, and the light emission data of the sub-field of the image data in the immediately preceding frame stored in the storage unit is used for the light emission data of a sub-field which was not rearranged, hence the light emission data of the sub-field of the image data in the immediately preceding frame can be used for the sub-field in the current frame where the light emission data was not rearranged, and as a consequence, motion blur and dynamic false contour, which are generated around the boundary of the foreground image and the background image, can be more reliably prevented.

It is preferable that the above mentioned image processing apparatus further comprises a depth information creation unit that creates, for each pixel where a foreground image and a background image overlap, depth information indicating whether the pixel is the foreground image or the background image, wherein the regeneration unit generates the rearranged light emission data of each sub-field based on the depth information created by the depth information creation unit.

According to this configuration, the depth information, to indicate whether the pixel is the foreground image or the background image, is created for each pixel where the foreground image and the background image overlap, and the rearranged light emission data of each sub-field is generated based on the created depth information.

When a foreground image and a background image overlap, the depth information, to indicate whether the pixel is the foreground image or the background image, is created for each pixel where the foreground image and the background image overlap, therefore the rearranged light emission data of each sub-field can be generated based on the depth information, and as a consequence, motion blur and dynamic false contour, which are generated in the overlapping portion of the foreground image and the background image, can be more reliably prevented.

In the above mentioned image processing apparatus, it is preferable that the depth information creation unit creates the depth information based on the motion vectors in at least two frames. According to this configuration, the depth information can be created based on the motion vectors in at least two frames.

In the above mentioned image processing apparatus, it is preferable that when the foreground image and the background image overlap, the regeneration unit changes, for a pixel constituting the foreground image which is specified by the depth information created by the depth information creation unit, the light emission data of a sub-field corresponding to a pixel located at a position that is moved spatially backward by the number of pixels corresponding to the motion vector detected by the motion vector detection unit, into the light emission data of the sub-field of the pixel before moving.

According to this configuration, if the foreground image and the background image overlap, for a pixel constituting the foreground image which is specified by the depth information, the light emission data of a sub-field corresponding to a pixel located at a position that is moved spatially backward by the number of pixels corresponding to the motion vector is changed into the light emission data of the sub-field of the pixel before moving. Hence the line of sight direction of the viewer can move smoothly according to the movement of the foreground image, and motion blur and dynamic false contour, generated in an overlapping portion of the foreground image and the background image, can be prevented.

An image display apparatus according to another aspect of the present invention comprises one of the image processing apparatuses described above, and a display unit which displays images using the rearranged light emission data after correction, output from the image processing apparatus.

According to this image display apparatus, in some cases, when the light emission data of a sub-field, corresponding to a pixel located in a position that is moved spatially backward by the number of pixels corresponding to the motion vector, is changed into the light emission data of the sub-field of the pixel before moving, light emission data may not be rearranged in an area around the boundary of a foreground image and a background image. But since the rearranged light emission data of each sub-field of the current frame is generated using the sub-fields in at least two frames, light emission data of the sub-fields of another frame can be used for the sub-fields of the current frame where the light emission data was not rearranged. As a consequence, motion blur and dynamic false contour, which are generated in an area around the boundary of the foreground image and the background image, can be more reliably prevented.

The embodiments or examples described in the "Best Mode for Carrying Out the Invention" section are merely to clarify the technical content of the present invention, and the present invention shall not be interpreted in a narrow sense limited to the embodiments, but numerous modifications and variations can be made within the scope of the true spirit and Claims of the present invention.

### Industrial Applicability

The image processing apparatus according to the present invention can more reliably prevent motion blur and dynamic false contour, therefore it is useful for an image processing apparatus which divides one field or one frame into a plurality of sub-fields and processes an input image so as to display gradation by combining a light emission sub-field where light is emitted and a non-emission sub-field where light is not emitted.

## Claims

1. An image processing apparatus which divides one field or one frame into a plurality of sub-fields, and processes an input image so as to display gradation by combining a light emission sub-field where light is emitted and a non-light emission sub-field where light is not emitted, the apparatus comprising:
a sub-field conversion unit that converts the input image into light emission data of each sub-field;
a motion vector detection unit that detects a motion vector using at least two input images which have a time lag therebetween; and
a regeneration unit that changes the light emission data of a sub-field corresponding to a pixel located at a position that is moved spatially backward by the number of pixels corresponding to the motion vector detected by the motion vector detection unit into the light emission data of the sub-field of the pixel before moving, whereby the light emission data of each sub-field converted by the sub-field conversion unit is spatially rearranged, and the rearranged light emission data of each sub-field of a current frame is generated using sub-fields of at least two frames.

2. The image processing apparatus according to Claim 1, further comprising a storage unit that stores image data in the immediately preceding frame converted by the sub-field conversion unit, wherein
the regeneration unit uses light emission data of a sub-field of the immediately preceding frame stored in the storage unit, for the light emission data of a sub-field which has not been rearranged.

3. The image processing apparatus according to Claim 1 or 2, further comprising a depth information creation unit that creates, for each pixel where a foreground image and a background image overlap, depth information indicating whether the pixel is the foreground image or the background image, wherein
the regeneration unit generates the rearranged light emission data of each sub-field based on the depth information created by the depth information creation unit.

4. The image processing apparatus according to Claim 3, wherein the depth information creation unit creates the depth information based on the motion vector in at least two frames.

5. The image processing apparatus according to Claim 3 or 4, wherein when the foreground image and the background image overlap, the regeneration unit changes, for a pixel constituting the foreground image which is specified by the depth information created by the depth information creation unit, the light emission data of a sub-field corresponding to a pixel located at a position that is moved spatially backward by the number of pixels corresponding to the motion vector detected by the motion vector detection unit, into the light emission data of the sub-field of the pixel before moving.

6. An image display apparatus comprising:
the image processing apparatus according to any one of Claims 1 to 5, and
a display unit which displays images using the rearranged light emission data after correction, output from the image processing apparatus.
